Europäisches Patentamt

European Patent Office

Office européen des brevets

(19)

(11) Veröffentlichungsnummer: **0 235 779**
**A1**

(12) **EUROPÄISCHE PATENTANMELDUNG**

(21) Anmeldenummer: 87102918.7

(22) Anmeldetag: 02.03.87

(51) Int. Cl.4: **B25J 13/02** , G05B 19/42 , G01L 5/22

(30) Priorität: 28.02.86 DE 3606685

(43) Veröffentlichungstag der Anmeldung:
09.09.87 Patentblatt 87/37

(84) Benannte Vertragsstaaten:
CH DE FR GB IT LI SE

(71) Anmelder: Forschungsinstitut für
Steuerungstechnik der Werkzeugmaschinen
und Fertigungseinrichtungen in der
Institutsgemeinschaft Stuttgart e.V.
Seidenstrasse 36
D-7000 Stuttgart(DE)

(72) Erfinder: Gruhler, Gerhard
Dannecker Strasse 19b
D-7000 Stuttgart 1(DE)

(74) Vertreter: Patentanwälte Dr. Solf & Zapf
Zeppelinstrasse 53
D-8000 München 80(DE)

(54) **Vorrichtung zur Handführung eines Industrieroboters.**

(57) Die Erfindung betrifft eine Vorrichtung zur Handführung eines Industrieroboters zum Zwecke der Programmierung eines Bewegungsablaufes der Roboterhand in Position und/oder Orientierung, d.h. in bis zu sechs Freiheitsgraden, die durch einen vorzugsweise würfelförmigen Meßkörper (11) gekennzeichnet ist, der am Ende des Roboterarmes(2) relativ zu festen Stützpunkten des Roboterarmes räumlich beweglich gelagert ist, wobei zwischen jeder von drei benachbarten, in einer Ecke (11a) zusammenlaufenden Seitenflächen des Meßkörpers (11) und den gegenüberliegenden Stützpunkten zwei voneinander beabstandete und zueinander parallele Abstandsmesser (22) parallel zu einer der Achsen - (X,Y,Z) eines zugrundegelegten kartesischen Koordinatensystems (4) sowie senkrecht zu einer der Hauptebenen des Koordinatensystems angeordnet und die die bei der Handführung auftretenden Auslenkungen des Meßkörpers messenden und in elektrische Signale umsetzenden Abstandsmesser mit einer die Roboterbewegungen steuernden Steuereinrichtung verbunden sind.

EP 0 235 779 A1

FIG. 2

## Vorrichtung zur Handführung eines Industrieroboters

Die Erfindung betrifft eine Vorrichtung zur Handführung eines Industrieroboters zum Zwecke der Programmierung eines Bewegungsablaufes der Roboterhand in Position und/oder Orientierung, d.h. in bis zu sechs Freiheitsgraden.

Derartige bekannte Vorrichtungen beruhen auf dem Prinzip einer Kraft-/Momentenerfassung. Hierzu sind Sensorkugeln mit Sechskomponenten-Kraft-/Momenten-Sensoren bekannt, die entweder raumfest an einem Steuergerät oder am Roboterarm angebracht werden. Die von der menschlichen Hand aufgebrachten Kräfte und/oder Momente werden als Bewegungskommandos in sechs Freiheitgraden über eine gewählte Steifigkeitsmatrix interpretiert. Berührt der Roboter dagegen seine Umgebung, beispielsweise ein zu bearbeitendes Werkstück, so erfolgt keine Umsetzung in Bewegung, sondern der Roboter übt nur die vom Programmierer ausgeübten Kräfte /Momente aus. Bei der Sensorkugel sind also die Kraft-/Momentenkommandos ursächlich, die Bewegungskommandos werden ihnen zugeordnet. Hierdurch treten bei den bekannten Kraft-/Momenten-Steuergeräten sehr aufwendige mathematische Beziehungen auf, um aus den Kraft-/Momenten-Meßwerten die gewünschten Positions-und/oder Orientierungsänderungen des Roboterarmes zu errechnen. Weiterhin sind hierdurch auch eventuelle Kompensationen des Eigengewichtes der beweglichen Teile nur durch aufwendige mathematische Maßnahmen möglich. Bei den bekannten Vorrichtungen treten bei hohen Auslenkungskräften und -momenten nur geringe Auslenkungswege auf, weshalb die mit diesem Verfahren arbeitenden bekannten Geräte überwiegend als ortsfeste Steuergeräte für Industrieroboter eingesetzt werden, jedoch als Handführgerät am Ende eines Roboterarmes zur Führung durch den Bediener weniger gut geeignet sind.

Der vorliegenden Erfindung liegt daher die Aufgabe zugrunde, eine Vorrichtung der eingangs beschriebenen Art anzugeben, mit der die Handführung eines Roboterarmes wesentlich erleichtert und vereinfacht wird, die sich durch mechanische Einfachheit und geringen steuerungstechnischen Aufwand auszeichnet, und bei der nur geringe Kräfte und Momente erforderlich sind.

Erfindungsgemäß wird dies durch die Merkmale des Hauptanspruchs erreicht. Vorteilhafte Weiterbildungen der Erfindung sind in den Unteransprüchen enthalten.

Anhand der Zeichnung soll im folgenden die Erfindung beispielhaft näher erläutert werden. Dabei zeigen:

Fig. l eine Prinzipdarstellung eines Industrieroboters mit handgeführtem Roboterarm und

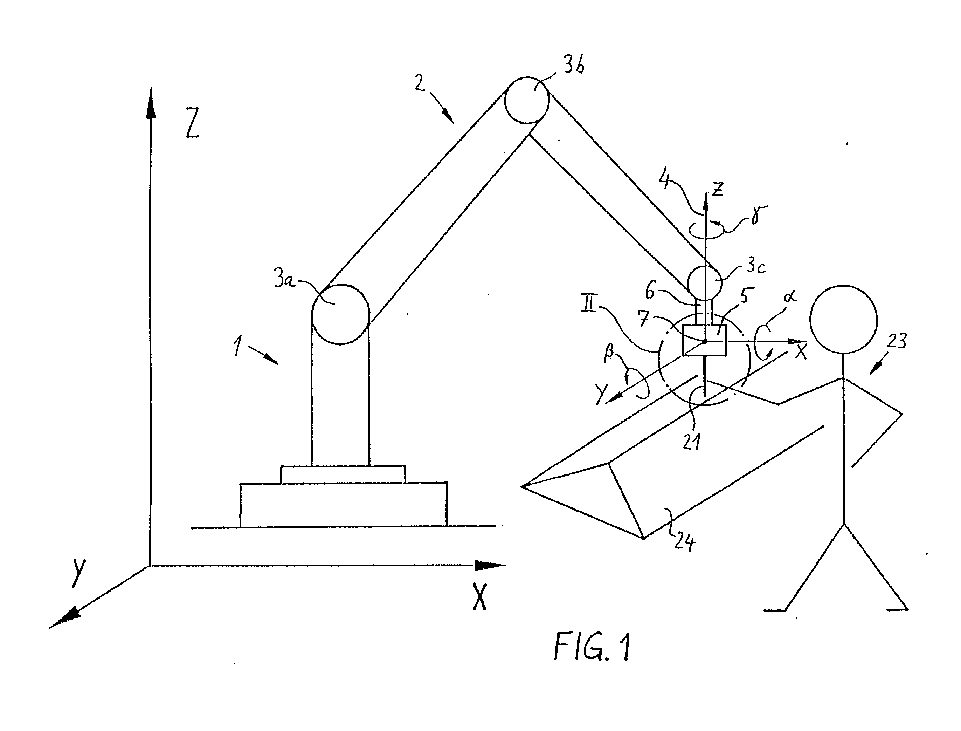

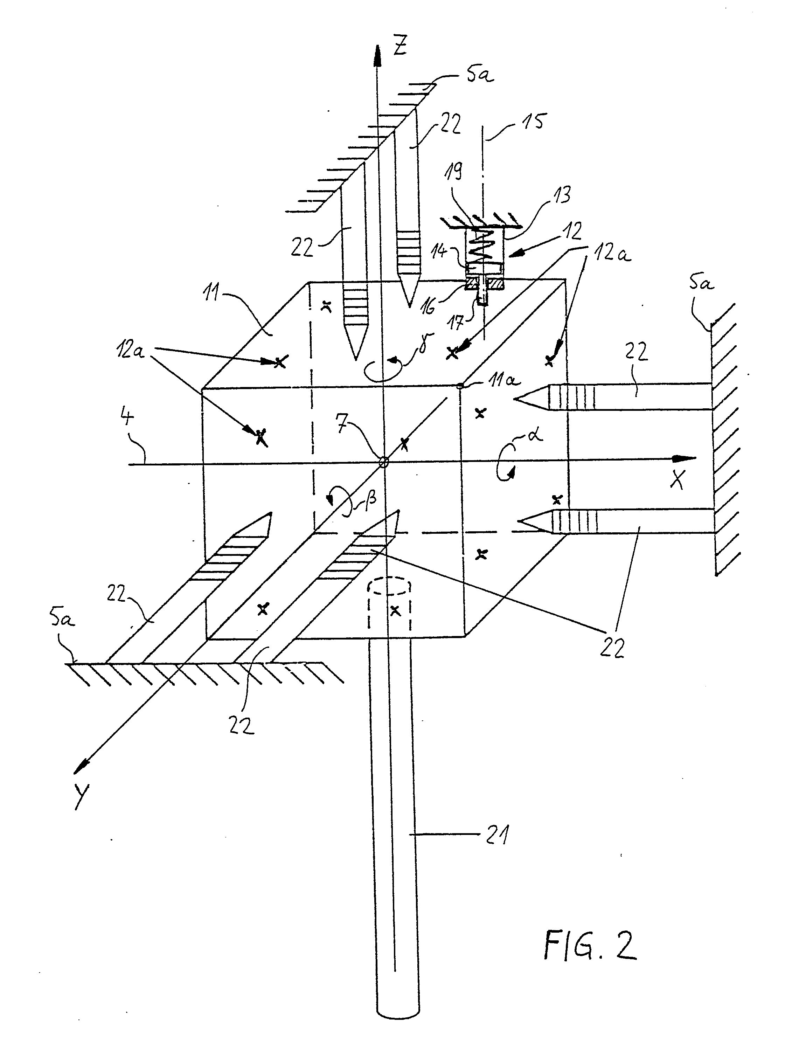

Fig. 2 eine Detailansicht des Bereiches ll gemäß Fig. l.

Ein bahngesteuerter Industrieroboter l weist einen Roboterarm 2 mit Gelenken 3a, 3b, 3c auf. Am freien Ende des Roboterarmes 2, d.h. an dem "Handgelenk" 3c, sind zum Durchführen bestimmter Arbeiten verschiedenartige Roboterhände (nicht dargestellt) befestigbar, die durch von einer Robotersteuerung gesteuerte Antriebe bestimmte Bewegungen in sechs Freiheitsgraden durchführen können, d.h. in Position (räumliche Verschiebung innerhalb eines zugrundegelegten kartesischen Koordinatensystems 4 längs der Achsen X, Y, Z = 3 Freiheitsgrade) und/oder Orientierung - (Verdrehung um die Achsen X, Y, Z des Koordinatensystems 4 um bestimmte Winkel $\alpha$, $\beta$ $\gamma$ = 3 Freiheitsgrade).

Zur Programmierung eines Bewegungsablaufes ist anstelle einer Roboterhand ein Orientierungskörper 5 für den sogenannten Handwurzelpunkt, einen definierten Bezugspunkt der Roboterhand, über ein Verbindungselement 6 fest mit dem Gelenk 3c derart verbindbar, daß der Mittelpunkt 7 des Orientierungskörpers 5 in dem Handwurzelpunkt der Roboterhand liegt und so ein Bezug der räumlichen Anordnung von dem zur Programmierung dienenden Orientierungskörper 5 zu der Roboterhand hergestellt ist. In dem Punkt 7 liegt ebenfalls der Ursprung des Koordinatensystems 4, dem sogenannten Handgelenk-Koordinatensystem.

Der Orientierungskörper 5 ist als vorzugsweise würfelförmiger Hohlkörper mit sechs Seitenwandungen ausgebildet. Innerhalb des Orientierungskörpers 5 ist ein vorzugsweise ebenfalls würfelförmiger kleinerer Meßkörper ll derart - schwebend gelagert, daß er relativ zu dem Orientierungskörper 5 räumlich beweglich ist (Fig. 2). Zu dieser Lagerung dienen Druckfederelemente l2, die zwischen den Innenflächen 5a der Seitenwandungen des Orientierungskörpers 5 und den Außenflächen des Meßkörpers ll angeordnet sind. Jedes Druckfederelement l2 besteht aus einem Zylinder l3, in dem ein Kolben l4 geführt ist. Die Zylinderlängsachse l5 ist vorzugsweise senkrecht zu der Innenfläche 5a des Orientierungskörpers 5 angeordnet. Der Zylinder l3 weist auf seiner dem Meßkörper ll zugekehrten Stirnseite eine Verschlußplatte l6 mit einer zentrischen Öffnung auf, durch die ein mit dem Kolben l4 verbundener Tastbolzen l7 hindurchgeführt ist und in Richtung des Meßkörpers ll aus dem Zylinder l3 herausragt. Zwischen dem der Verschlußplatte l6 gegenüberliegenden Zylinderboden und dem Kolben

I4 ist eine unter Vorspannung stehende Spiraldruckfeder I9 angeordnet, so daß der Kolben I4 in Richtung der Innenseite der Verschlußplatte I6 gedrängt wird. Das Druckfederelement I2, d.h. die gesamte Kolbenzylinderanordnung, ist in Richtung der Zylinderlängsachse I5 verstellbar an der Innenwandung 5a des Orientierungskörpers 5 befestigt. Vorzugsweise sind gegenüber jeder Seitenfläche des Meßkörpers II vier der beschriebenen Druckfederelemente angeordnet. In Fig. 2 ist der Einfachheit halber lediglich ein Druckfederelement I2 gezeichnet, während die übrigen Druckfederelemente lediglich durch Kreuze I2 a angedeutet sind.

Die Druckfederelemente I2 sind durch Einstellung ihrer Position längs der Zylinderlängsachse I5 derart "auf Berührung justiert", daß alle Tastbolzen I7 die jeweilige Seitenfläche des Meßkörpers II gerade berühren, wenn jeder Kolben I4 an der Verschlußplatte I6 anliegt, also kein Kolben I4 in den Zylinder I3 hinein verschoben ist. Dabei ist es wesentlich, daß die Federvorspannung größer ist als die Massenkräfte des Meßkörpers II einschließlich eines mit letzterem verbundenen Programmier-Handgriffels 2I. Hierdurch wird vorteilhafterweise jede massenbedingte Auslenkung des so in der Schwebe, d.h. in einer definierten Ruhestellung, gehaltenen Meßkörpers II verhindert.

Der Handgriffel 2I ist vorzugsweise auf der unteren Seitenfläche des Meßkörpers II in hierzu senkrechter Anordnung befestigt. Er ragt zweckmäßigerweise durch eine Öffnung der unteren Seitenwandung des Orientierungskörpers 5 aus diesem heraus, so daß mittels des Handgriffels 2I der Meßkörper II innerhalb des Orientierungskörpers 5 in Position und/oder Orientierung gegen die Federvorspannung der Druckfederelemente I2 ausgelenkt werden kann. Der Mittelpunkt des Meßkörpers II liegt ebenfalls in dem Mittelpunkt 7 des Orientierungskörpers 5, so daß die Mittelpunkte 7 des Orientierungskörpers 5 und des Meßkörpers II, der Ursprung des Koordinatensystems 4 sowie der Handwurzelpunkt der Roboterhand in einem Punkt (dem Punkt 7) zusammenfallen. Hierdurch ist ein Bezug von der Auslenkbewegung des Meßkörpers II auf die Bewegung der Roboterhand hergestellt.

Zur Messung der Auslenkungen des Meßkörpers II sind zwischen den Innenflächen 5a der Seitenwandungen des Orientierungskörpers 5 und den Seitenflächen des Meßkörpers II Abstandsmesser 22 angeordnet. Gegenüber jeder von drei benachbarten Seitenflächen, die in einer Ecke IIa des Meßkörpers II zusammenlaufen, sind vorzugsweise zwei voneinander beabstandete Abstandsmesser 22 paarweise parallel zueinander angeordnet, so daß insgesamt sechs Abstandsmesser 22 vorhanden sind. Die einzelnen Abstandsmesser 22 jedes Paares sind vorzugsweise gleich voneinander beabstandet. Die Abstandsmesser 22 jedes Paares sind parallel zu einer der Achsen X,Y,Z des Koordinatensystems sowie in dessen Hauptebenen nebeneinander liegend angeordnet, so daß benachbarte Paare in zueinander senkrechten Ebenen angeordnet sind. Weiterhin sind die Abstandsmesser 22 eines Paares derart zueinander sowie in bezug auf die jeweilige Seitenfläche des Meßkörpers II angeordnet, daß die jeweilige Achse X,Y,Z des Koordinatensystems 4 durch die Mitte des lichten Abstandes der beiden Abstandsmesser 22 verläuft, so daß beide Abstandsmesser 22 eines Paares im gleichen Abstand von der zugehörigen Achse X,Y oder Z angeordnet sind. Im unausgelenkten "Schwebe-" Zustand des Meßkörpers II sind die Abstandsmesser 22 auch senkrecht zu dessen Seitenflächen angeordnet. Zweckmäßigerweise sind die Abstandsmesser 22 an den Innenflächen 5a des Orientierungskörpers 5 befestigt, wodurch der Meßkörper II relativ zu den Abstandsmessern 22 beweglich ist. Alternativ dazu liegt es aber ebenfalls im Rahmen der Erfindung, die Abstandsmesser 22 an dem Meßkörper II zu befestigen und zusammen mit dem Meßkörper II bei dessen Auslenkung gegenüber dem Orientierungskörper 5 zu bewegen. In jedem Fall werden lineare Abstandsänderungen zwischen den Seitenflächen des Meßkörpers II und den gegenüberliegenden Innenflächen 5a des Orientierungskörpers 5 gemessen und durch die Abstandsmesser 22 in elektrische Signale umgesetzt.

Bei den Abstandsmessern 22 kann es sich einerseits um Abstandstaster handeln, die die Seitenflächen des Meßkörpers II berühren. Zur Umsetzung der räumlichen Abstandswerte in elektrische Signale arbeiten derartige Abstandstaster zumeist nach dem Prinzip von Differenzialtransformatoren. Andererseits können auch berührungslose Abstandssensoren verwendet werden, die optisch oder auf andere geeignete Weise arbeiten.

Durch Auslenkung des Handgriffels 2I, wenn z. B. ein Programmierer 23 (Fig. I) den Handgriffel 2I entlang der Kontur eines Werkstückes 24 führt, erfolgt nun ebenfalls eine Auslenkung des Meßkörpers II. Wird z. B. der Meßkörper II mit dem Handgriffel 2I vertikal nach unten ausgelenkt - (Positionsänderung), so erfassen die beiden oberen, auf der dem Handgriffel 2I gegenüberliegenden Seitenfläche des Meßkörpers II angeordneten Abstandsmesser 22 die gleiche Abstandsänderung, während die übrigen vier Abstandsmesser 22 keine Abstandsänderung erfassen. Wird der Meßkörper II dagegen z. B. um die Achse X geschwenkt (Orientierungsänderung), so ermitteln die oberen Abstandsmesser 22 unterschiedliche Abstandsmeßwerte. Jede erfolgte Auslenkung wird somit durch die Abstandsmesser 22 durch Ermittlung einzelner linearer Abstandsmeßwerte und durch deren Umsetzung in elektrische Signale an eine Steuereinrichtung übermittelt. Hier kann die Auslenkung, d.h. die Positions-und/oder Orientierungsänderung des Meßkörpers II vorteilhafterweise durch einfache mathematische Grundoperationen, d.h. Addition und/oder Subtraktion, der einzelnen linearen Abstandsmeßwerte errechnet werden. Die Steuereinrichtung veranlaßt nun eine Nachfolgebewegung des Roboterarmes, d.h. des Orientierungskörpers 5, der folglich jede mittels des Handgriffels 2I veranlaßte Auslenkbewegung des Meßkörpers II mit einer geringen zeitlichen Verzögerung in Position und/oder Orientierung "nachfährt". Die Nachfolgebewegungen werden gespeichert, so daß später eine Roboterhand diese "vorgemachten" Bewegungen z. B. zur Bearbeitung eines dem Werkstück 24 entsprechenden anzufertigenden Werkstückes exakt "nachmacht", da ja der Handwurzelpunkt der Roboterhand mit den Mittelpunkten (Punkt 7) der Körper 5 und II übereinstimmt. Durch die Nachfolgebewegung wird stets der definierte Ruhezustand, d.h. die Schwebestellung des Meßkörpers II innerhalb des Orientierungskörpers 5 wiederhergestellt, sofern nicht unmittelbar weitere Auslenkungen erfolgen. Jedoch ist der Orientierungskörper 5 bestrebt, durch seine räumliche Ausrichtung in Position und/oder Orientierung die Ruhestellung des Meßkörpers II zu erreichen.

Hierdurch folgt der Orientierungskörper 5 exakt jeder Auslenkbewegung des Meßkörpers II.

Der lichte Abstand zweier, ein Paar bildender, zueinander paralleler Abstandsmesser 22 bestimmt die Meßgenauigkeit des Systems. Der Abstand ist daher zu optimieren.

Das Eigengewicht von Handgriffel 2I und Meßkörper II kann vorteilhafterweise sehr gering gehalten werden. Hierdurch sind zur Auslenkung des Handgriffels 2I und des Meßkörpers II nur sehr geringe Kräfte und Momente erforderlich, was ergonomisch besonders günstig ist. Zudem sind das Eigengewicht sowie auch eventuell durch berührende Abstandstaster auf den Meßkörper II ausgeübte Kräfte durch die vorteilhafte Lagerung des Meßkörpers II mechanisch vollständig kompensiert, so daß keinerlei aufwendige steuerungstechnischen Kompensationsmaßnahmen erforderlich sind.

## Ansprüche

I. Vorrichtung zur Handführung eines Industrieroboters zum Zwecke der Programmierung eines Bewegungsablaufes der Roboterhand in Position und/oder Orientierung, d.h. in bis zu sechs Freiheitsgraden, **gekennzeichnet durch** einen vorzugsweise würfelförmigen Meßkörper (II), der am Ende des Roboterarmes (2) relativ zu festen Stützpunkten des Roboterarmes (2) räumlich beweglich gelagert ist, wobei zwischen jeder von drei benachbarten, in einer Ecke (IIa) zusammenlaufenden Seitenflächen des Meßkörpers (II) und den gegenüberliegenden Stützpunkten zwei voneinander beabstandete und zueinander parallele Abstandsmesser (22) parallel zu einer der Achsen (X,Y,Z) eines zugrundegelegten kartesischen Koordinatensystems (4) sowie senkrecht zu einer der Hauptebenen des Koordinatensystems (4) angeordnet und die die bei der Handführung auftretenden Auslenkungen des Meßkörpers (II) messenden und in elektrische Signale umsetzenden Abstandsmesser (22) mit einer die Roboterbewegungen steuernden Steuereinrichtung verbunden sind.

2. Vorrichtung nach Anspruch I, **dadurch gekennzeichnet,** daß die festen Stützpunkte auf den Innenflächen (5a) eines einen Orientierungskörper (5) bildenden, fest mit dem Ende des Roboterarmes (2) verbundenen, vorzugsweise würfelförmigen Hohlkörpers liegen, innerhalb dem der Meßkörper (II) relativ zu dem Orientierungskörper (5) räumlich beweglich gelagert ist, und daß der Mittelpunkt (7) des Orientierungskörpers (5), der Mittelpunkt des Meßkörpers (II), der Ursprung des Koordinatensystems (4) sowie ein Handwurzelpunkt der Roboterhand in einem Punkt liegen.

3. Vorrichtung nach Anspruch I oder 2, **dadurch gekennzeichnet,** daß die zwei, jeweils ein paralleles Paar bildenden Abstandsmesser (22) derart zueinander sowie in bezug auf die jeweilige Seitenfläche des Meßkörpers (II) angeordnet sind, daß die jeweilige Achse (X,Y,Z) des Koordinatensystems (4) durch die Mitte des lichten Abstandes der beiden Abstandsmesser (22) verläuft.

4. Vorrichtung nach einem oder mehreren der Ansprüche I bis 3, **dadurch gekennzeichnet,** daß der Meßkörper (II) innerhalb des Orientierungskörpers (5) schwebend gelagert ist.

5. Vorrichtung nach einem oder mehreren der Ansprüche I bis 4, **dadurch gekennzeichnet,** daß zwischen den Innenflächen (5a) des Orientierungskörpers (5) und den jeweils gegenüberliegenden Seitenflächen des Meßkörpers (II) Druckfederelemente (I2) angeordnet sind.

6. Vorrichtung nach Anspruch 5, **dadurch gekennzeichnet,** daß zwischen jeder Innenfläche (5a) des Orientierungskörpers (5) und der gegenüberliegenden Seitenfläche des Meßkörpers (II) vier Druckfederelemente (I2) gleichmäßig voneinander beabstandet angeordnet sind.

7. Vorrichtung nach Anspruch 5 oder 6, **dadurch gekennzeichnet,** daß jedes Druckfederelement (12) einen Zylinder - (13) mit einem darin geführten Kolben (14) aufweist, wobei zwischen dem Zylinderboden und dem Kolben (14) eine Druckfeder (19) angeordnet ist und wobei die Längsachse (15) der Kolbenzylinderanordnung (13,14) senkrecht zu der jeweiligen Innenfläche (5a) des Orientierungskörpers (5) angeordnet ist.

8. Vorrichtung nach einem oder mehreren der Ansprüche 5 bis 7, **dadurch gekennzeichnet ,** daß der Zylinder (13) auf seiner dem Zylinderboden gegenüberliegenden Stirnseite durch eine Verschlußplatte (16) verschlossen ist.

9. Vorrichtung nach einem oder mehreren der Ansprüche 5 bis 8, **dadurch gekennzeichnet,** daß der Kolben (14) auf seiner der Druckfeder (19) abgekehrten Seite einen durch eine Öffnung der Verschlußplatte (16) ragenden Tastbolzen (17) aufweist.

10. Vorrichtung nach einem oder mehreren der Ansprüche 5 bis 9, **dadurch gekennzeichnet,** daß jedes Druckfederelement (12) derart in Richtung der Zylinderlängsachse (15) verstellbar an der Innenfläche (5a) des Orientierungskörpers (5) befestigt ist, daß in einer definierten Ruhestellung des Meßkörpers (11) gegenüber dem Orientierungskörper (5) der Kolben (14) an der Innenseite der Verschlußplatte (16) sowie gleichzeitig das freie Ende des Tastbolzens (17) auf der Seitenfläche des Meßkörpers (11) aufliegt.

11. Vorrichtung nach einem oder mehreren der Ansprüche 1 bis 10, **gekennzeichnet durch** einen an eine, vorzugsweise der unteren Seitenfläche des Meßkörpers (11) in senkrechter Anordnung befestigten Programmier-Handgriffel (21), der durch eine Öffnung des Orientierungskörpers (5) hindurchragt.

12. Vorrichtung nach einem oder mehreren der Ansprüche 5 bis 11, **dadurch gekennzeichnet,** daß die Höhe der Federvorspannkraft der Druckfederelemente (12) größer als die wirkenden Massenkräfte des Meßkörpers (11) einschließlich des Programmier-Handgriffels (21) sind.

13. Vorrichtung nach einem oder mehreren der Ansprüche 1 bis 12, **dadurch gekennzeichnet,** daß die Abstandsmesser (22) in der unausgelenkten definierten Ruhestellung des Meßkörpers (11) senkrecht zu dessen jeweiliger Seitenfläche angeordnet sind.

14. Vorrichtung nach einem oder mehreren der Ansprüche 1 bis 13, **dadurch gekennzeichnet,** daß die Abstandsmesser (22) die Seitenflächen des Meßkörpers (11) berührende Abstandstaster sind.

15. Vorrichtung nach einem oder mehreren der Ansprüche 1 bis 13, **dadurch gekennzeichnet,** daß die Abstandsmesser (22) berührungslose Abstandssensoren sind.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 060 173 (CENTRO RICERCHE FIAT S.p.A.) <br> * Zusammenfassung * | 1,4,11 ,15 | B 25 J 13/02 <br> G 05 B· 19/42 <br> G 01 L 5/22 |
| A | | 2 | |
| A | DE-A-2 504 127 (HITACHI LTD) <br><br> * Seite 10, Zeilen 13-25; Seite 18, Zeile 16 - Seite 19, Zeile 4; Seite 23, Zeilen 16-27; Seite 30, Zeilen 13-23 * | 1,3-5, 12-15 | |
| A | FR-A-2 434 426 (REGIE NATIONALE DES USINES RENAULT) <br> * Patentansprüche 2,3; Seite 12, Zeilen 17-25 * | 3,5,7, 14 | TECHNICAL FIELDS SEARCHED (Int. Cl.4) |
| A | US-A-3 145 333 (PARDINI et al.) <br> * Spalte 1, Zeilen 54-67 * | 7-9 | B 25 J <br> G 05 B <br> G 01 L |

The present search report has been drawn up for all claims

| Place of search | Date of completion of the search | Examiner |
|---|---|---|
| THE HAGUE | 02-06-1987 | LAMMINEUR P.C.G. |